# EUROPEAN PATENT SPECIFICATION

(11) **EP 3 852 078 B1**
(45) Date of publication and mention of the grant of the patent: **31.07.2024**
(21) Application number: 20152516.9
(22) Date of filing: 17.01.2020
(51) Int. Cl.: G06Q 10/087, G06V 20/52, G06V 20/54, G08G 1/017, G08G 1/04, G08G 1/00

(54) **SYSTEM FOR LOCALIZING ONE OR MORE PARKED VEHICLES IN A PARKING AREA**
SYSTEM ZUR LOKALISIERUNG EINES ODER MEHRERER GEPARKTER FAHRZEUGE AUF EINEM PARKPLATZ
SYSTÈME DE LOCALISATION D'UN OU DE PLUSIEURS VÉHICULES GARÉS DANS UNE ZONE DE STATIONNEMENT

(43) Date of publication of application: 21.07.2021
(73) Proprietor: Ford Global Technologies, LLC, Dearborn, MI 48126 (US)
(72) Inventor: Newton, David, 50859 Köln (DE); Hughes, Danny, 3000 Leuven (BE); Janjua, Hassaan, 3000 Leuven (BE); Fan, Yang, 3000 Leuven (BE)
(74) Representative: Markowitz, Markus

(56) References cited:
- US-A1- 2007 057 817
- US-A1- 2015 138 001
- US-A1- 2017 337 792
- US-A1- 2019 026 690
- US-A1- 2019 213 883
- US-A1- 2020 370 890
- US-B1- 6 476 715

## Description

The invention relates to a system and a method for localizing one or more parked vehicles to be reworked in a parking area comprising a plurality of parking slots.

Vehicles are built on a moving assembly line with many stations. But vehicles are not necessarily completely built at the end of a moving assembly line and may need some rework. That a vehicle is not completely built in this context means that there are outstanding concerns with this vehicle, and from a manufacturing perspective it is not complete. After vehicles to be reworked have left a moving assembly line they are parked by Employees awaiting that the concerns can be reworked.

If there is a small concern with a vehicle at one station of a moving assembly line this will be logged for later rework versus the whole assembly line being stopped. All required rework is tracked in a quality control system while the vehicles to be reworked are parked in special park areas to wait for a timeslot for the rework. Normally this is only a few hundred vehicles but during new product launch periods this number can be much higher hence the need to manage the reference between vehicle and parking location.

When an optimal rework schedule for all the not completed vehicles exists it is necessary to know the location of those vehicles, so repairmen can pick up the required vehicle for the rework timeslot. Inbuilt localization devices of the parked vehicles cannot help to find them, because those devices are not always activated or are not able to provide a sufficient accuracy, e.g. a parking area with hundreds of vehicles or simply do not work indoors where significant parking capacity exists etc.

The current solution for obtaining the locations of parked vehicles and their vehicle identification number (VIN) is that somebody runs through the parked vehicles with a GPS aided RFID scanner and reads RFID-Chips in order to create a map of parked vehicles. This needs additional manpower and costs time and money. Further, this running-through-the-vehicles procedure has to be repeated in a defined cycle time to update the parking map. Also, the transport of vehicles needs to be able to find the specific vehicles for the transport systems, e.g. lorries, trains, ships, etc.

US 2013 / 0 026 940 A1 discloses a self-identifying light source comprising an emitter that produces visible light and an autonomous modulator in electrical communication with the emitter that automatically and continually modulates the visible light produced by the emitter, wherein the modulated visible light represents an identification code of the light source.

KR 101 794 806 B1 discloses a vehicle parking management system to easily check the location of a parked vehicle by using visible light wireless communication. A visible light wireless communication unit performs visible light wireless communication with an LED lamp of a vehicle. The visible light wireless communication unit transmits location information from the beginning entry point to the final parking point to a server.

KR 2017 / 0 115 661 A discloses a system to make it easier to find one's own vehicle in a parking lot with a plurality of vehicles by turning on a LED light toward the upper part of the vehicle.

US 6 476 715 B1 discloses a vehicle identification by flickering LED's that may be mounted on sides and/or incorporated into the brake lights or running lights of the vehicle. The flickering encodes an identifier, preferably the VIN, in binary format using a barcode type of encoding, ASCII, etc. The VIN is decoded by a detector. The detector may be coupled to a database to record a vehicle's identifier and/or to determine if the vehicle is stolen. If the identifier of a stolen vehicle is found, an alarm is sounded and/or information about the vehicle can be displayed. The flicker may be repeated at intervals or continuous. The intervals are preferably greater than the flickering duration, so that the flickers are spaced apart and therefore flickers from a group of vehicles will not overlap, permitting each vehicle to be individually identified without spatial localization.

CN 202 486 851 U discloses a charging system for a parking lot. The charging system comprises LED transmitting systems, LED receiving systems and a parking lot charging system, wherein the LED transmitting systems are mounted on vehicles, the LED receiving systems are mounted in the parking lot, and the parking lot charging system is in communication with the LED receiving systems. According to the specific flow, when the vehicles run into the parking lot, the LED transmitting systems transmit vehicle information, the LED receiving systems receive the vehicle information transmitted by the LED transmitting systems, and the vehicle information and the time when the vehicles run into the parking lot are stored in the charging system. When the vehicles drive out of the parking lot, the LED transmitting systems transmit vehicle information, the LED receiving systems receive the vehicle information transmitted by the LED transmitting systems, and the vehicle information and the time when the vehicles drive out of the parking lot are stored in the charging system. The charging system calculates parking fees according to charging rules and deducts money from associated bank accounts.

The publication "Intelligent Parking Management System Based on Image Processing" available on the link https-//www.researchgate.net/publication/274694376_Intelligent_Parking_Management_System_Based_on_lmage_Processing discloses a method for supporting a driver when searching for a free parking slot on a parking area.

US2019026690A1 discloses automotive asset location management systems and methods that utilize passive transmitter tags in combination with fixed and hand-held scanning devices in communication with a cloud server database. The systems may acquire, track, and report automotive asset location specific to the manufacturing plant yard, as well as production milestone events.

It is an object of the invention to provide an enhanced possibility for localizing one or more parked vehicles in a parking area comprising a plurality of parking slots.

The present invention relates to a system for localizing one or more parked vehicles to be reworked in a parking area comprising a plurality of parking slots as defined in appended claim 1.

It is pointed out that individual features and measures specified in the following description can be combined with each other in arbitrary technical reasonable way and can disclose further embodiments of the invention. The description characterizes and specifies the invention additionally in particular together with the figures.

According to the invention a vehicle to be reworked is equipped with the optical sender, for example, at the end of a moving assembly line. After or before that, the individual identification information of the optical sender and the individual identification information of the vehicle is gathered by the gathering device. The gathering device sends this information to the data processing device, wherein the data processing device stores the correlation between said individual identification information of the optical sender and the individual identification information of the vehicle in order to create a correlation between said individual optical signal sequence of the optical sender and the individual identification information of the vehicle. The parking area is at least partly monitored with the optical sensor so that, when the vehicle equipped with the optical sender is parked in the parking area, the optical sensor receives the individual optical signal sequence of the optical sender. The optical sensor transmits a set of signal sequences corresponding to all the individual optical signal sequences of the optical senders detected by the optical sensor to the data processing device. The data processing device identifies the vehicle on basis of the correlation between said individual optical signal sequence of the optical sender and the individual identification information of the vehicle, and therefore is able to localize the vehicle on the parking area.

Thus, the invention is in particular applicable as a vehicle localization system for end of moving assembly line vehicle parking areas of vehicle manufacturers. Such parking areas comprise a relatively large number of parking slots.

The optical sender can be placed on the roof of the vehicle without being mechanically fixed to the vehicle so that the optical sender can easily be removed again from the vehicle roof. For example, the optical sender may be magnetically attached to the vehicle roof. That the optical sender is arranged to emit an individual optical signal sequence means that the optical sender emits a unique identification (ID) signal for the optical sender via off/on blinking. The optical sender may comprise at least one light emitting diode (LED) for generating the individual optical signal sequence. This can help to reduce manufacturing costs of the system. The inventive system may comprise more than one optical sender, in particular a plurality of optical senders, one optical sender for each vehicle to be reworked.

The optical sensor may be stationary installable in the parking area. The optical sensor may be a camera. The optical sensor is calibrated by using several, e.g. four, optical senders arranged at known positions and not being placed on vehicle roofs. Advantageously, the optical sensor realizes a fine-grained vehicle localization with an accuracy of < 1 m at 50 m distance. The inventive system comprises more than one optical sensor. The system comprises a optical sensor mesh with optical sensors located around the parking area in such a way that the complete parking area is covered, wherein each optical sensor covers a local area of the parking area and allows the computation of all the vehicle locations in that area based only on the ground truth computation that can be done once at the above-mentioned calibration process. Line of subject obstructions can be compensated for by having areas covered by multiple sensors that may provide redundant information.

The data processing device can be located remote from the optical sensor and/or the parking area. The data processing device creates the correlation between said individual optical signal sequence and an individual identification information of the vehicle, preferably a correlation table containing a corresponding correlation for each vehicle to be reworked, and stores said correlation and correlation table, respectively.

The gathering device may be stationary installed or may be a manually movable device. The gathering device may be an optical device. In particular, the gathering device may comprise a scanning unit.

According to an advantageous embodiment the individual identification information of the vehicle and/or the individual identification information of the optical sender is a barcode or a QR code. Here, the gathering device may be a scanning unit for scanning the respective code. Every optical sender of the system has its own personal ID which may be displayed on the optical sender via the respective code.

According to a further advantageous embodiment the optical sender is arranged to emit only infrared signals. Here, the optical sensor is arranged to exclusively receive and process infrared signals. Hereby no problems with a General Data Protection Regulation (GDPR) occur, because the optical sensor is blind in the viewable optical range and does not allow tracking of people. Further, no disturbance of the surrounding area by the blinking optical sender occurs.

According to a further advantageous embodiment the optical sender comprises at least one signal source and at least one optical diffusor at least partly surrounding the signal source. The signal source may be a LED. The optical diffusor creates a spherical image of the blinking optical sender from each location of the parking area. This helps to get an easy use of standard methods for detection of circular objects in image processing. The optical diffusor may be constructed very similar to a table-tennis ball. Without the optical diffusor, a signal source, for example a LED, would generate a light beam with a very small opening angle. This would be hard to detect by a simple optical sensor design. Due to the optical diffusor the signal source shows up as a ball in the image of the optical sensor and this ball is circular from all perspectives so that each ball is a circular disc in the image captured by the optical sensor.

An optical sender implementation can use an infrared transmission frequency that avoids solar infrared background noise by using a frequency that is absorbed to a significant degree while passing through the atmosphere. The optical sensor may include a "band pass" filter aligned with the transmission frequency of the sender.

The present invention further relates to a method for localizing one or more parked vehicles to be reworked in a parking area comprising a plurality of parking slots as defined in appended claim 5.

Advantages and/or embodiments mentioned above with respect to the system correspondingly apply to the method.

Further advantageous embodiments of the invention are disclosed in the dependent claims and in the following description of the figures. It shows
- Fig. 1: a schematic view of an embodiment of an inventive system and
- Fig. 2: a schematic view of an exemplary pattern seen by the optical sensor of the system according to Fig. 1.

In the different figures like parts are provided with same reference signs, so that generally these parts are described only once.

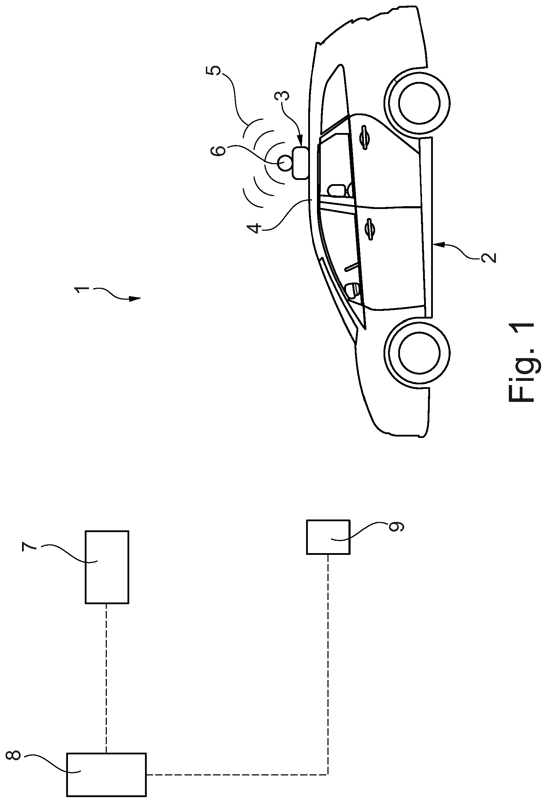

Fig. 1 shows a schematic view of an embodiment of an inventive system 1 for localizing a vehicle 2 parked in a not shown parking area comprising a plurality of not shown parking slots, wherein the vehicle 2 is parked in such a parking slot.

The system 1 comprises an optical sender 3 placed on a roof 4 of the vehicle 2 and being arranged to emit an individual optical signal sequence 5. The optical sender 3 is arranged to emit only infrared signals. The optical sender 3 comprises at least one not shown signal source in form of a LED and at least one optical diffusor 6 at least partly surrounding the signal source.

Further, the system 1 comprises an optical sensor 7 installed in the parking area. The optical sensor 7 is a camera which is only sensitive with respect to incident infrared light.

Furthermore, the system 1 comprises a data processing device 8 connected to said optical sensor 7 and containing at least a correlation between said individual optical signal sequence 5 and an individual identification information of the vehicle 2.

Moreover, the system 1 comprises a gathering device 9 connected to said data processing device 8 and being arranged to gather an individual identification information of the optical sender 3 and the individual identification information of the vehicle 2. The individual identification information of the vehicle 2 and/or the individual identification information of the optical sender 3 is a barcode or a QR code.

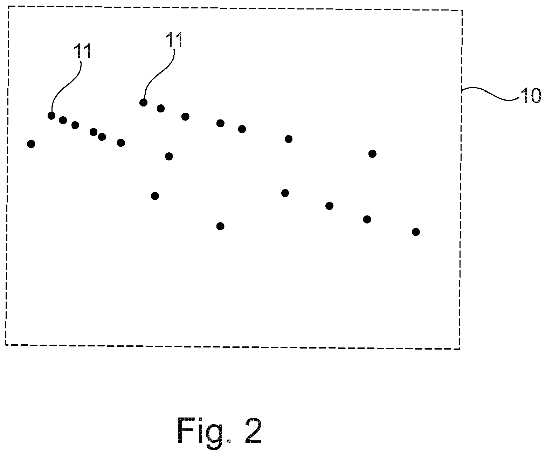

Fig. 2 shows a schematic view of an exemplary pattern seen by the optical sensor of the system according to Fig. 1. In particular, Fig. 2 shows an image captured by the optical sensor, whereby in an exemplary area surrounded by a dotted line 10 the image comprises areas where no optical sender is present, and optical senders sending individual optical signal sequences, which are shown as black dots 11 in Fig. 2. That is, the vehicles corresponding to these optical senders are simultaneously localized by the system.

### Reference signs:

- 1: system
- 2: vehicle
- 3: optical sender
- 4: roof of 2
- 5: individual optical signal sequence
- 6: optical diffusor
- 7: optical sensor
- 8: data processing device
- 9: gathering device
- 10: exemplary area
- 11: optical senders sending individual optical signal sequences / black dots

## Claims

1. System (1) for localizing one or more parked vehicles (2) to be reworked in a parking area comprising a plurality of parking slots, the system (1) comprising at least one optical sender (3) arranged to emit an individual optical signal sequence (5),
an optical sensor mesh with optical sensors (7) located around the parking area in such a way that the complete parking area is covered,
at least one data processing device (8), connected to said optical sensors (7), and
at least one gathering device (9) connected to said data processing device (8),
**whereby**
the vehicle (2) to be reworked is equipped with the optical sender (3) on a roof (4) of the respective vehicle (2), wherein an individual identification information of the optical sender (3) and an individual identification information of the vehicle (2) is gathered by the gathering device (9), wherein
the gathering device (9) sends this information to the data processing device (8) which stores the correlation between said individual identification information of the optical sender (3) and the individual identification information of the vehicle (2) to create a correlation between said individual optical signal sequence (5) of the optical sender (3) and the individual identification information of the vehicle (2), and wherein
the parking area is at least partly monitored with at least one of said optical sensors (7) so that,
when the vehicle (2) equipped with the optical sender (3) is parked in the parking area, the optical sensor (7) receives the individual optical signal sequence (5) of the optical sender (3), and wherein
the optical sensor (7) transmits a set of signal sequences corresponding to all the individual optical signal sequences (5) of the optical senders (3) detected by the optical sensor (7) to the data processing device (8) which identifies the vehicle (2) on basis of the correlation between said individual optical signal sequence (5) of the optical sender (3) and the individual identification information of the vehicle (2), whereby the optical sensor (7) is calibrated by using several optical senders (3) arranged at known positions located around the parking area and not being placed on vehicle roofs, wherein each optical sensor (7) covers a local area of the parking area allowing computation all the vehicle locations in that area based on ground truth computation done once at the calibration process.

2. System (1) according to claim 1, wherein
the individual identification information of the vehicle (2) and/or the individual identification information of the optical sender (3) is a barcode or a QR code.

3. System (1) according to claim 1 or 2, wherein
the optical sender (3) is arranged to emit only infrared signals.

4. System (1) according to one of the preceding claims, wherein
the optical sender (3) comprises at least one signal source and at least one optical diffusor (6) at least partly surrounding the signal source.

5. Method for localizing one or more parked vehicles (2) to be reworked in a parking area comprising a plurality of parking slots, implemented in a system (1) (1) according to
one of the preceding claims, comprising
at least one optical sender (3) arranged to emit an individual optical signal sequence (5),
an optical sensor mesh with optical sensors (7) located around the parking area in such a way that the complete parking area is covered,
at least one data processing device (8), connected to said optical sensor (7) and
at least one gathering device (9) connected to said data processing device (8),
said method **at least comprising the steps of** equipping the vehicle (2) to be reworked with the optical sender (3) on a roof (4) of the respective vehicle (2), and gathering an individual identification information of the optical sender (3) and an individual identification information of the vehicle (2) by the gathering device (9),
sending this information by the gathering device (9) to the data processing device (8) which stores the correlation between said individual identification information of the optical sender (3) and the individual identification information of the vehicle (2) to create a correlation between said individual optical signal sequence (5) of the optical sender (3) and the individual identification information of the vehicle (2),
at least partly monitoring the parking area with at least one of said optical sensors (7) so that,
when the vehicle (2) equipped with the optical sender (3) is parked in the parking area, the optical sensor (7) receives the individual optical signal sequence (5) of the optical sender (3),
transmitting a set of signal sequences corresponding to all the individual optical signal sequences (5) of the optical senders (3) detected by the optical sensor (7) to the data processing device (8) which identifies the vehicle (2) on basis of the correlation between said individual optical signal sequence (5) of the optical sender (3) and the individual identification information of the vehicle (2), calibrating the optical sensor (7) by using several optical senders (3) arranged at known positions located around the parking area and not being placed on vehicle roofs, wherein each optical sensor (7) covers a local area of the parking area allowing computation of all the vehicle locations in that area based on ground truth computation done once at the calibration process.

## Patentansprüche

1. System (1) zum Lokalisieren von einem oder mehreren geparkten Fahrzeugen (2), die auf einem Parkplatz, der eine Vielzahl von Stellplätzen umfasst, nachzubearbeiten sind, wobei das System (1) mindestens einen optischen Sender (3) umfasst, der angeordnet ist, eine individuelle optische Signalsequenz (5) zu emittieren,
ein optisches Sensornetz mit optischen Sensoren (7), die sich in einer Weise auf dem Parkplatz befinden, dass der vollständige Parkplatz abgedeckt ist,
mindestens eine Datenverarbeitungsvorrichtung (8), die mit den optischen Sensoren (7) verbunden ist, und
mindestens eine Sammelvorrichtung (9), die mit der Datenverarbeitungsvorrichtung (8) verbunden ist,
wodurch
das nachzubearbeitende Fahrzeug (2) auf einem Dach (4) des jeweiligen Fahrzeugs (2) mit dem optischen Sender (3) ausgerüstet ist, wobei von der Sammelvorrichtung (9) individuelle Identifikationsinformationen des optischen Senders (3) und individuelle Identifikationsinformationen des Fahrzeugs (2) gesammelt werden, wobei
die Sammelvorrichtung (9) diese Informationen an die Datenverarbeitungsvorrichtung (8) sendet, die die Korrelation zwischen den individuellen Identifikationsinformationen des optischen Senders (3) und den individuellen Identifikationsinformationen des Fahrzeugs (2) speichert, um eine Korrelation zwischen der individuellen optischen Signalsequenz (5) des optischen Senders (3) und den individuellen Identifikationsinformationen des Fahrzeugs (2) zu erstellen, und wobei
der Parkplatz mindestens teilweise mit mindestens einem der optischen Sensoren (7) überwacht wird, derart, dass, wenn das mit dem optischen Sender (3) ausgerüstete Fahrzeug (2) auf dem Parkplatz geparkt wird, der optische Sensor (7) die individuelle optische Signalsequenz (5) des optischen Senders (3) empfängt, und wobei
der optische Sensor (7) einen Satz von Signalsequenzen, die allen individuellen optischen Signalsequenzen (5) der optischen Sender (3) entsprechen, die vom optischen Sensor (7) detektiert werden, zur Datenverarbeitungsvorrichtung (8) überträgt, die das Fahrzeug (2) auf Basis der Korrelation zwischen der individuellen optischen Signalsequenz (5) des optischen Senders (3) und den individuellen Identifikationsinformationen des Fahrzeugs (2) identifiziert, wodurch der optische Sensor (7) unter Verwendung von mehreren optischen Sendern (3), die in bekannten Positionen angeordnet sind, die sich auf dem Parkplatz befinden, und die nicht auf Fahrzeugdächern platziert sind, kalibriert wird, wobei jeder optische Sensor (7) einen lokalen Bereich des Parkplatzes abdeckt, was eine Berechnung von allen Fahrzeugstandorten in diesem Bereich auf Basis einer Grundwahrheitsberechnung erlaubt, die einmal im Kalibrierprozess vorgenommen wird.

2. System (1) nach Anspruch 1, wobei
die individuellen Identifikationsinformationen des Fahrzeugs (2) und/oder die individuellen Identifikationsinformationen des optischen Senders (3) ein Barcode oder ein QR-Code sind.

3. System (1) nach Anspruch 1 oder 2, wobei
der optische Sender (3) angeordnet ist, nur Infrarotsignale zu emittieren.

4. System (1) nach einem der vorhergehenden Ansprüche, wobei
der optische Sender (3) mindestens eine Signalquelle und mindestens einen optischen Diffusor (6), der die Signalquelle mindestens teilweise umgibt, umfasst.

5. Verfahren zum Lokalisieren von einem oder mehreren geparkten Fahrzeugen (2), die auf einem Parkplatz, der eine Vielzahl von Stellplätzen umfasst, nachzubearbeiten sind, das in einem System (1) (1) nach einem der vorhergehenden Ansprüche implementiert wird und Folgendes umfasst
mindestens einen optischen Sender (3), der angeordnet ist, eine individuelle optische Signalsequenz (5) zu emittieren,
ein optisches Sensornetz mit optischen Sensoren (7), die sich in einer Weise auf dem Parkplatz befinden, dass der vollständige Parkplatz abgedeckt ist,
mindestens eine Datenverarbeitungsvorrichtung (8), die mit dem optischen Sensor (7) verbunden ist, und
mindestens eine Sammelvorrichtung (9), die mit der Datenverarbeitungsvorrichtung (8) verbunden ist,
wobei das Verfahren mindestens folgende Schritte umfasst Ausrüsten des nachzubearbeitenden Fahrzeugs (2) mit einem optischen Sender (3) auf einem Dach (4) des jeweiligen Fahrzeugs (2) und Sammeln von individuellen Identifikationsinformationen des optischen Senders (3) und individuellen Identifikationsinformationen des Fahrzeugs (2) durch die Sammelvorrichtung (9),
Senden dieser Informationen durch die Sammelvorrichtung (9) an die Datenverarbeitungsvorrichtung (8), die die Korrelation zwischen den individuellen Identifikationsinformationen des optischen Senders (3) und die individuellen Identifikationsinformationen des Fahrzeugs (2) speichert, um eine Korrelation zwischen der individuellen optischen Signalsequenz (5) des optischen Senders (3) und den individuellen Identifikationsinformationen des Fahrzeugs (2) zu erstellen,
mindestens teilweises Überwachen des Parkplatzes mit mindestens einem der optischen Sensoren (7), derart, dass,
wenn das mit dem optischen Sender (3) ausgerüstete Fahrzeug (2) auf dem Parkplatz geparkt wird, der optische Sensor (7) die individuelle optische Signalsequenz (5) des optischen Senders (3) empfängt,
Übertragen eines Satzes von Signalsequenzen, die allen individuellen optischen Signalsequenzen (5) der optischen Sender (3) entsprechen, die vom optischen Sensor (7) detektiert werden, zur Datenverarbeitungsvorrichtung (8), die das Fahrzeug (2) auf Basis der Korrelation zwischen der individuellen optischen Signalsequenz (5) des optischen Senders (3) und den individuellen Identifikationsinformationen des Fahrzeugs (2) identifiziert, Kalibrieren des optischen Sensors (7) unter Verwendung von mehreren optischen Sendern (3), die in bekannten Positionen angeordnet sind, die sich auf dem Parkplatz befinden, und die nicht auf Fahrzeugdächern platziert sind, wobei jeder optische Sensor (7) einen lokalen Bereich des Parkplatzes abdeckt, was eine Berechnung von allen Fahrzeugstandorten in diesem Bereich auf Basis einer Grundwahrheitsberechnung erlaubt, die einmal im Kalibrierprozess vorgenommen wird.

## Revendications

1. Système (1) pour localiser un ou plusieurs véhicules stationnés (2) devant être retravaillés dans une zone de stationnement comprenant une pluralité d'emplacements de stationnement, le système (1) comprenant au moins un expéditeur optique (3) agencé pour émettre une séquence de signaux optiques individuels (5),
un maillage de capteurs optiques avec des capteurs optiques (7) situés autour de la zone de stationnement de telle sorte que la zone de stationnement complète soit couverte, au moins un dispositif de traitement de données (8), connecté auxdits capteurs optiques (7), et
au moins un dispositif de collecte (9) connecté audit dispositif de traitement de données (8),
grâce quoi
le véhicule (2) à retravailler est équipé de l'expéditeur optique (3) sur un toit (4) du véhicule respectif (2), dans lequel une information d'identification individuelle de l'expéditeur optique (3) et une information d'identification individuelle du véhicule (2) sont collectées par le dispositif de collecte (9), dans lequel
le dispositif de collecte (9) envoie ces informations au dispositif de traitement de données (8) qui stocke la corrélation entre lesdites informations d'identification individuelle de l'expéditeur optique (3) et les informations d'identification individuelle du véhicule (2) pour créer une corrélation entre ladite séquence de signaux optiques individuels (5) de l'expéditeur optique (3) et les informations d'identification individuelle du véhicule (2), et dans lequel
la zone de stationnement est au moins partiellement surveillée avec au moins l'un desdits capteurs optiques (7) de sorte que,
lorsque le véhicule (2) équipé de l'expéditeur optique (3) est stationné dans la zone de stationnement, le capteur optique (7) reçoit la séquence de signaux optiques individuels (5) de l'expéditeur optique (3), et dans lequel
le capteur optique (7) transmet un ensemble de séquences de signaux correspondant à toutes les séquences de signaux optiques individuels (5) des expéditeurs optiques (3) détectés par le capteur optique (7) au dispositif de traitement de données (8) qui identifie le véhicule (2) sur la base de la corrélation entre ladite séquence de signaux optiques individuels (5) de l'expéditeur optique (3) et les informations d'identification individuelle du véhicule (2), grâce à quoi le capteur optique (7) est étalonné en utilisant plusieurs expéditeurs optiques (3) agencés à des positions connues situées autour de la zone de stationnement et n'étant pas placés sur des toits de véhicule, chaque capteur optique (7) couvrant une zone locale de la zone de stationnement permettant de calculer tous les emplacements de véhicule dans cette zone sur la base d'un calcul de réalité de terrain une fois au processus d'étalonnage.

2. Système (1) selon la revendication 1, dans lequel les informations d'identification individuelle du véhicule (2) et/ou les informations d'identification individuelle de l'expéditeur optique (3) sont un code à barres ou un code QR.

3. Système (1) selon la revendication 1 ou la revendication 2, dans lequel l'expéditeur optique (3) est agencé pour émettre uniquement des signaux infrarouges.

4. Système (1) selon l'une des revendications précédentes, dans lequel l'expéditeur optique (3) comprend au moins une source de signal et au moins un diffuseur optique (6) entourant au moins partiellement la source de signal.

5. Procédé de localisation d'un ou de plusieurs véhicules stationnés (2) à retravailler dans une zone de stationnement comprenant une pluralité d'emplacements de stationnement, mis en œuvre dans un système (1) (1) selon l'une des revendications précédentes, comprenant au moins un expéditeur optique (3) agencé pour émettre une séquence de signaux optiques individuels (5), un maillage de capteurs optiques avec des capteurs optiques (7) situés autour de la zone de stationnement de telle sorte que la zone de stationnement complète soit couverte, au moins un dispositif de traitement de données (8), connecté audit capteur optique (7) et au moins un dispositif de collecte (9) connecté audit dispositif de traitement de données (8), ledit procédé au moins comprenant les étapes consistant à équiper le véhicule (2) d'être retravaillé avec l'expéditeur optique (3) sur un toit (4) du véhicule respectif (2), et à collecter des informations d'identification individuelles de l'expéditeur optique (3) et des informations d'identification individuelle du véhicule (2) par le dispositif de collecte (9), à envoyer ces informations par le dispositif de collecte (9) au dispositif de traitement de données (8) qui stocke la corrélation entre lesdites informations d'identification individuelle de l'expéditeur optique (3) et les informations d'identification individuelles du véhicule (2) pour créer une corrélation entre ladite séquence de signaux optiques individuels (5) de l'expéditeur optique (3) et les informations d'identification individuelle du véhicule (2), surveiller au moins en partie la zone de stationnement avec au moins un desdits capteurs optiques (7) de sorte que, lorsque le véhicule (2) équipé de l'expéditeur optique (3) est stationné dans la zone de stationnement, le capteur optique (7) reçoit la séquence de signal optique individuelle (5) de l'expéditeur optique (3), transmettre un ensemble de séquences de signal correspondant à toutes les séquences de signal optique individuelles (5) des expéditeurs optiques (3) détectés par le capteur optique (7) au dispositif de traitement de données (8) qui identifie le véhicule (2) sur la base de la corrélation entre ladite séquence de signal optique individuelle (5) de l'expéditeur optique (3) et les informations d'identification individuelles du véhicule (2), étalonner le capteur optique (7) en utilisant plusieurs expéditeurs optiques (3) agencés à des positions connues situées autour de la zone de stationnement et n'étant pas placés sur des toits de véhicule, chaque capteur optique (7) couvrant une zone locale de la zone de stationnement permettant le calcul de tous les emplacements de véhicule dans cette zone sur la base d'un calcul de réalité de terrain une fois au niveau du processus d'étalonnage.
